(19) Europäisches Patentamt
European Patent Office
Office européen des brevets

(11) Publication number : 0 129 369 B2

(12) NEW EUROPEAN PATENT SPECIFICATION

(45) Date of publication of the new patent specification : **15.04.92 Bulletin 92/16**

(51) Int. Cl.[5] : **C08G 2/36,** C08G 2/18

(21) Application number : **84303812.6**

(22) Date of filing : **06.06.84**

# (54) Method of manufacturing a copolymer of trioxane.

(30) Priority : **17.06.83 JP 109052/83**

(43) Date of publication of application : **27.12.84 Bulletin 84/52**

(45) Publication of the grant of the patent : **14.09.88 Bulletin 88/37**

(45) Mention of the opposition decision : **15.04.92 Bulletin 92/16**

(84) Designated Contracting States : **BE DE FR GB IT NL**

(56) References cited :
**DE-A- 1 445 273**
**DE-A- 3 146 115**
**FR-A- 1 419 666**
**GB-A- 2 030 576**
**JP-A- 437 544**
**PATENTS ABSTRACTS OF JAPAN, vol. 2, no. 144, 18th November 1978, page 3261C78**
**BASF Data Sheet "Trioxan", April 1981**

(73) Proprietor : **POLYPLASTICS CO. LTD.**
**30 Azuchimachi 2-chome**
**Higashi-ku Osaka-shi (JP)**

(72) Inventor : **Kasuga, Takuzo**
**16-7, Shimizu 2 chome**
**Suginami-ku Tokyo (JP)**
Inventor : **Asano, Takeshi**
**400-8, Morijima**
**Fuji-shi Shizuoka (JP)**
Inventor : **Ikenaga, Yukio**
**324, Miyashita**
**Fuji-shi Shizuoka (JP)**
Inventor : **Yamawaki, Masami**
**94-2, Gokanjima**
**Fuji-shi Shizuoka (JP)**
Inventor : **Takeda, Yasuyuki, Takeda**
**885-1, Miyajima**
**Fuji-shi Shizuoka (JP)**
Inventor : **Ichimura, Koichi**
**52, Morishita**
**Fuji-shi Shizuoka (JP)**

(74) Representative : **Livsey, Gilbert Charlesworth Norris et al**
**HYDE, HEIDE & O'DONNELL 10-12 Priests Bridge**
**London SW15 5JE (GB)**

EP 0 129 369 B2

## Description

The present invention relates to an improved method of manufacturing copolymers of trioxane by copolymerizing trioxane as the main ingredient with one or more comonomers which are copolymerizable therewith.

The method of manufacturing polyacetals by copolymerizing trioxane with cyclicethers eg ethylene oxide, or cyclic formals in the presence of cation-active catalysts for example boron trifluoride and followed by stabilizing treatments is known and used in industry. However during such polymerization reactions the liquid monomers gradually solidify during the progress of polymerization, so that temperature control becomes more difficult towards the end of the polymerization reaction, and the reaction becomes unstable, with lack of uniform temperature distribution in the reaction system. Thus undesirable phenomena such as depolymerization within the system tend to reduce the polymerization yield, and decomposition of the main molecular chains significantly reduce the average molecular weight of the resulting copolymer product. Furthermore polymer degradation may occur during after-treatment, including product-separation, washing, drying and particularly stabilizing treatments. Although various kinds of polymerisation apparatus designed to improve temperature distribution have been proposed, a satisfactory result has not hitherto been obtained.

It is known that polymers in particular polyacetal resins, can be stabilized by adding sterically-hindered phenols, which are antioxidants, to the polymer products, the mixture being subsequently melted to introduce some measure of dispersion of the said phenol. Usually the sterically-hindered phenols are added to the solid polymers after non-reacted monomers have been separated.

Japanese Patent Application JP-A-53 109 595 describes a process of homopolymerising trioxane or copolymrising it with a cyclicether having adjacent carbon atoms, in the presence of a cation-active polymerisation catalyst and in the presence of about 0.1 to 5.0 mol per 1000 mol of trioxane of a chain transfer agent constituted by a phenol. The chain transfer agent is said to facilitate production of a polymer of controlled molecular weight without lowering the yield, without prolonging the induction period in the copolymerisation of trioxane with acyclic ether, and without reducing the base stability of the polymer. The phenols proposed in the Japanese publication for use as the chain transfer agent include substituted as well as unsubstituted phenols by the publication indicates that it is preferable to avoid substituents which have more than a slight sterically hindering effect.

In our Japanese patent application No 102 500/83 (corresponding to European Patent Application No 84 30 3811.8 filed 6th June 1984) a method of manufacturing homopolymers and copolymers of trioxane have been disclosed wherein the polymerisation is performed in the presence of a sterically hindered phenol which is used in an amount of from 0.001 to 2% by weight based on the total weight of the monomer(s) to be polymerised. The selected phenol becomes uniformly dispersed in the polymer in the course of the polymerisation. Irregular decomposition reaction is controlled during the polymerisation and the process enables the production of polymers of higher average molecular weight (lower melt index).

It has now been found that when a copolymer of trioxane and another monomer is produced in the presence of a sterically hindered phenol, the stability of the formed co-polymer, which is already enhanced by the sterically hindered phenol which is distributed in the copolymer, can be further improved by melting the polymer and heating it for a period of time in its melted state.

According to the present invention, there is provided a method of manufacturing a copolymer of trioxane with enhanced stability by copolymerising trioxane with a co-monomer in the presence of a cation-active catalyst and of a substituted phenol, characterised in that the co-polymerisation is carried out in the presence of from 0.001 to 2.0% by weight, based on the total amount of the monomers, of one or more sterically hindered phenols selected from hexamethylene glycol bis(3,5-di-t-butyl-4-hydroxy-hydrocinnamate), tetrakis[methylene(3,5-di-t-butyl-4-hydroxyhydrocinnamate)] methane, triethylene glycol bis-3-(3-t-butyl-4-hydroxy-5-methylphenyl) propionate, and n-octadecyl 3-(4′-hydroxy-3′,5′-di-t-butylphenyl) propionate, which phenol(s) become(s) uniformly distributed in the copolymer in course of the polymerisation, and in that following the polymerisation the formed copolymer containing said distributed phenol(s) is heated to cause melting of the copolymer. The copolymer is heated sufficiently to cause it to melt and to effect an improvement in its stability.

The small amount of sterically hindred phenol (0.001 to 2.0% by weight based on the total amount of monomers to be polymerized) can be added to the monomers prior to the commencement of polymerisation. The phenol is preferably used in an amount within the range from 0.005 to 1.0% by weight. The addition of too small an amount of the phenol naturally has only a negligible effect, while too large amounts tend to retard the polymerization reaction and is uneconomic. Very small amounts within the aforementioned range of 0.001 to 2.0% will serve to reduce polymer degradation during the polymerization reaction but with a view to achieving the best stabilizing effect it is preferable to use relatively large amount of phenol within that range.

As for the method of adding the sterically hindered phenol to the monomers, it can be dissolved directly in

the liquid monomers or a solution of the phenol in a small amounts of solvent which is inert to the polymerization may be added to the monomers. In the case of continuous polymerization, the phenol may be continuously fed into the monomer line leading to the polymerizer, so that the phenol becomes mixed with and dissolved in the monomers feeding to the polymerizer, or the phenol may be added to and dissolved in the monomers in their storage tanks.

As the polymerization catalysts employed in exercising the method of this invention, any well known cation-active catalyst which is generally used for polymerization of trioxane, etc., may be chosen. Examples of such catalysts are: Lewis acids including, especially halides of boron, tin, titanium, phosphorus, arsenic and antimony, e.g., boron trifluoride, tin tetrachloride, titanium tetrachloride, phosphorus pentachloride, phosphorus pentafluoride, arsenic pentafluoride and antimony pentafluoride and their complex compounds or salts protonic acids, e.g., perchloric acid; protonic acid esters, particularly those of perchloric acid with lower aliphatic alcohols, e.g., t-butyl perchlorate; protonic acid anhydrides, particularly mixed anhydrides of perchloric acid and lower aliphatic carboxylic acids, e.g., acetyl perchlorate; trimethyloxonium hexafluorophosphate, triphenylmethyl hexafluoroarsenate, acetyl tetrafluoroborate, acetyl hexafluorophosphate and acetyl hexafluoroarsenate. Particularly preferred polymerization catalysts are boron trifluoride, boron trifluoride diethyletherate, boron trifluoride di-n-butyl etherate, triethyloxonium tetra-fluoroborate, etc.

By the method of this invention, trioxane may be copolymerized with at least one comonomer which is polymerizable therewith. Such comonomers include those which form polymers having branched or reticulated structure in their molecules. Examples of such comonomers are 4-phenyldixolane, propylene oxide, phenoxypropene oxide, and cyclicethers represented by the formula,

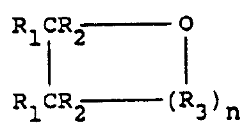

(where $R_1$ and $R_2$ each stands for hydrogen, lower alkyl or lower halogen-substituted alkyl group; $R_3$ is methylene, oxymethylene, lower alkyl- or halogenoalkyl-substituted methylene, or lower alkyl- or halogenoalkyl-substituted oxymethylene group and n represents 0 to 3), e.g., epichlorohydrin, ethylene oxide, 1,3-dioxolane, diethylene-glycolformal, 1,4-butanediolformal, and 1,3-dioxane.

Also cyclicesters such as β-propiolactone and vinyl compounds such as styrene or acrylonitrile can be used. In addition, said comonomers producing polymers having branched structures or reticulated structures include alkyl-mono (or di)-glycidylethers (or formals) such as methylglycidylformal, ethyl glycidylformal, propylglycidylformal, butylglycidylformal, ethyleneglycoldiglycidylether, triethyleneglycoldiglycidylether and bis(1,2,6-hexanetriol)triformal.

In the performance of a method according to the present invention a conventional chain transfer agent such as a low molecular weight acetal can be used in addition to a sterically hindered phenol, for regulating the molecular weight of the polymer.

Various kinds of polymerization apparatus can be used in carrying out the present invention, e.g. co-kneaders, twin-screw type continuous extrusion mixers, twin-paddle type continuous mixers and other known trioxane-polymerization apparatus. Also a combination of two or more kinds of polymerization apparatus can be used.

The method according to the present invention is effective even when temperatures can be insufficiently regulated, and it is still more effective when the solid lumpy reaction products are treated for a lengthy period in order to increase the yield of the polymerization or the prevention of decomposition in the case when temperatures of the reaction mixture can only be regulated with difficulty in a large-sized polymerization apparatus.

An important feature of the present invention is the stabilising treatment, involving melting of the copolymer, which is performed after completion of the polymerization reaction. This stabilising treatment can be performed immediately after termination of the polymerisation by addition of a catalyst deactivator e.g. an amine or amidine compound, or a hydroxide, an inorganic salt, a carboxylic acid salt, or an alkoxide of an alkali or alkaline earth metal; after removing unreacted trioxane by evaporation at temperatures below 150°C under normal or reduced pressure in a nitrogen or air stream; or after washing off unreacted monomers by treating the polymerized reaction product with water, an organic solvent or their mixture containing a polymerization catalyst deactivator, followed by drying.

The reaction product obtained by the copolymerization reaction generally contains unreacted monomers and has unstable chain terminals. Remvoal of such unstable parts is necessary for giving the copolymer the required stability for its practical use. While it has previously been proposed to effect decomposition and removal of unstable co-polymer parts by heating and melting the copolymer, it has been very difficult to decompose and remove the unstable parts without causing decrease in molecular weight of the required product, because the decomposition of the unstable parts is accompanied by splitting of the main polymer chain. To counter this problem, it has been proposed to add a stabiliser to the copolymer. Various stabilisers have been proposed for example antioxidants, alkaline materials including amines, amidines, amides, and hydroxides, inorganic and organic acid salts, and alkoxides of alkali or alkaline earth metals. The required effects are however not adequately obtained. When the copolymerisation is effected in the presence of a small amount of a sterically hindered phenol which becomes distributed in the copolymer, in accordance with the present invention, the resulting copolymer is not only more stable on its formation but is capable of being given a further improvement in stability by heating the co-polymer at temperatures above melting without the disadvantage of significant reduction in molecular weight. Any tendency for molecular weight decrease to occur due to splitting of the main polymer chain is unusually small when compared with what would occur if the copolymer had been formed without the presence of any sterically hindered phenol, and even if sterically hindered phenol were added to the copolymer after its formation, so as to adhere to the particle surfaces, but before the melting step.

The sterically hindered phenol which is added to the monomers is not leached out even if the polymerisation product is washed at quite high temperatures but remains substantially in the polymer. Its presence in a state of uniform dispersion inside the copolymer product is believed to be conductive to such an effect.

The melting and stabilization treatment in this invention is dependent for its success on the sterically hindered phenol being added to the monomers to be polymerised so that the phenol is present during the polymerization and is present in the formed copolymer subjected to such treatment.

When carrying out the invention, another stabilising compound can if desired be added to the polymer prior to the melting and stabilizing treatment. Various kinds of stabilising compounds e.g., amines, amidines, amides, hydroxides, inorganic salts, salts of organic acids and alkoxides of alkali and alkaline earth metals. A supplementary amount of a sterically hindered phenol, or some other antioxidant can be added to the copolymer at that stage. Moreover a small amount, not in excess of 10% by weight based on the copolymer, of residual water, an organic solvent or a mixture thereof, may be present in the polymerisation mixture or may be added to the copolymer before or during the melting and stabilizing treatment. The presence of such a small amount of water is effective for promoting decomposition of unstable parts in the copolymer.

The melting and stabilizing treatment can be carried out in any conventional equipment. For example vented single-screw or twin-screw extruders, and other continuous mixing, heating and degasifying devices suitable for highly viscous materials may be used. The aspiration of air from the apparatus is desirable for evacuation of gaseous decomposition products, or water or other additive. Adequate kneading and surface renewal are desirable conditions.

The temperature to which the copolymer is heated to effect the stabilization is higher than the melting point or melting range of the polymer. Thus a temperature which is up to 100°C higher than the melting point or melting range may be used with good effect. A heating time of from 1 to 30 minutes, depending on the amount of unstable parts of the copolymer, is adequate. Generally, shorter heating times are used according as the treatment temperature is higher.

Any required additives e.g. stabilizer, lubricant, nucleating agent, mould release agent, colouring agent, inorganic filler such as glass particles, and high-molecular or low-molecular organic modifiers, can be added to the copolymer and kneaded therewith before the melting and stabilising treatment is performed. After the melting and stabilizing treatment the product can be pelletized.

The invention is hereinafter described in more detail with reference to the following non-limiting Examples and Comparative Examples wherein percentages and ppm are expressed by weight.

Yield of polymerization is the amount of polymer, which is obtained after the treatment, expressed as a percentage by weight of the total monomer feed.

MI: Melt Index is measured at 190°C (g/10 min). The Melt Index is indicative of the molecular weight of the formed copolymer. The lower the MI, the higher the molecular weight. (Stabilizer is added in a proportion of about 1% in order to prevent decomposition during measurement of the MI).

Alkali-decomposition rate: This rate is expressed in terms of the percentage of formaldehyde (based on the amount of the copolymer) which was dissolved in the solution after heating 1g of the copolymer in 100 ml of a 50% aqueous solution of methanol containing 0.5% of ammonium hydroxide, at 180°C for 45 minutes in a closed vessel.

Rate of weight loss by heating: This is the percentage reduction in weight of the copolymer determined by drying 5g of the crushed copolymer in vacuum and then heating the copolymer in air at 200°C for 45 minutes.

Examples 1 to 4:

A continuous mixing reactor was used having an effective length of 1.3 m and comprising a barrel casing

having a jacket for the passage of a heating medium therethrough and housing two parallel rotors 80 mm in diameter with intermeshing paddle blades. Warm water of 80°C was passed through the jacket and the two rotors were rotated in opposite directions at a speed of 100 rpm. Copolymerization was performed by continuously feeding into one end of said reactor, at a rate of 10 kg per hour, a feedstock comprising trioxane and ethylene oxide in a weight ratio of 100:2.5 and having dissolved therein 0.05% of tetrakis [methylene-(3,5-di-t-butyl-4-hydroxyhydrocinnamate)] methane (Irganox® 1010, a product of CIBA-GEIGY). A solution of boron trifluoride butyl etherate in cyclohexane was simultaneously fed into the reactor at a rate corresponding 60 ppm of the boron compound based on the total weight of the monomers to be polymerised. The reactor mixture which was discharged from the opposite end of the reactor was immediately thrown into water containing 0.1% of butylamine, stirred at 80°C for 1 hour and, after removing liquid, dried at 135°C for 2 hours. Various measurements of the polymer taken at this stage gave the values as listed in the table below. It should be noted, however, that the rate of weight loss by heating was measured after addition of 0.5% of 2,2′-methylenebis (4-methyl-6-t-butylphenol) and 0.1% of dicyandiamide as stabilizers to the polymer thus obtained.

| Polymerization yield | MI | Rate of alkali decomposition | Rate of weight loss by heating | Melting point |
|---|---|---|---|---|
| 71% | 4.6 | 1.9% | 1.7% | 168°C |

Four samples of the dried copolymer were melted, kneaded (at approximately 230°C resin temperature) and extruded, while sucking at a pressure of 40 kPa (300mm Hg) using a single-screw extruder with venthole of 40mm ID, to obtain copolymer pellets. In the case of one sample (Example 1) nothing was added to the copolymer prior to this heat treatment. In the case of the other three samples (Examples 2 to 4) other substances were added to the copolymer in the heat treatment, as indicated in Table 1. Properties of the heat treated products are listed in that Table.

Comparative Examples 1 to 8:

A copolymerization was performed in the same manner as in Examples 1 to 4 but without the addition of tetrakis [methylene(3,5-di-t-butyl-4-hydroxyhydrocinnamate) methane. The yield of copolymers and certain properties thereof are shown in the table below. The rate of weight loss by heating were measured after addition of the same stabilizers as in Examples 1 to 4, mentioned Examples added to the polymers obtained.

| Polymerization yield | MI | Rate of alkali decomposition | Rate of weight loss by heating | Melting point |
|---|---|---|---|---|
| 68% | 6.1 | 2.9% | 3.1% | 168°C |

Eight samples of the dried copolymer were melted, kneaded and extruded, while sucking, using a screw extruder, as in Examples 1 to 4, to obtain copolymer pellets. Substances were added to the copolymer samples, in the heat treatment, as indicated in Table 1. Properties of the heat treated products are listed in that Table.

TABLE 1

| | Sterically hindered phenol added to monomers (note 1) | Sterically hindered phenol added in the melting treatment (note 1) | Another (or other) additive(s) added in the melting treatment | Properties after the melting treatment (note 2) | | |
|---|---|---|---|---|---|---|
| | | | | MI | Rate of alkali decomposition | Rate of thermal decomposition (note 3) |
| Example 1 | 0.05% | - | - | 4.9 (+0.3) | 1.6% (-0.3%) | 1.3% (-0.4%) |
| Comparative example 1 | - | - | - | 11.2 (+5.1) | 5.2% (+2.3%) | 5.0% (+1.9%) |
| Comparative example 2 | - | 0.05% | - | 9.8 (+3.7) | 4.7% (+1.8%) | 4.6% (+1.5%) |
| Example 2 | 0.05% | - | 1% of dicyandiamide 0.1% | 4.7 (+0.1) | 1.4% (-0.5%) | 1.2% (-0.5%) |
| Comparative example 3 | - | - | Same as above | 9.8 (+3.7) | 3.9% (+1.0%) | 3.7% (+0.6%) |
| Comparative example 4 | - | 0.05% | Same above | 9.2 (+3.1) | 3.8% (+0.9%) | 3.6% (+0.5%) |
| Example 3 | 0.05% | - | 3% of aqueous solution containing 5% of tributylamine | 4.7 (+0.1) | 1.0% (-0.9%) | 0.8% (-0.9%) |
| Comparative example 5 | - | - | Same as above | 9.1 (+3.0) | 3.2% (+0.3%) | 3.4% (+0.3%) |
| Comparative example 6 | - | 0.5% | Same as above | 8.8 (+2.7) | 2.9% (0%) | 2.8% (-0.3%) |
| Example 4 | 0.05% | - | 0.1% of calcium stearate and 1.0% of water | 4.7 (+0.1) | 1.1% (-0.8%) | 0.9% (-0.8%) |
| Comparative example 7 | - | - | Same as above | 9.2 (+3.1) | 3.0% (+0.1%) | 3.3% (+0.2%) |
| Comparative example 8 | - | 0.05% | Same as above | 8.9 (+2.8) | 2.7% (-0.2%) | 2.6% (-0.5%) |

Note 1: Tetrakis [methylene(3,5-di-t-butyl-4-hydroxyhydrocinnamate)] methane (Irganox® 1010, a product of CIBA-GEIGY) was used.

Note 2: Numerals in parenthese show amounts of change due to melting treatment.

Note 3: Measurements were taken with addition of 0.5% of 2,2'-methylenebis(4-methyl-6-t-butylphenol) and 0.1% of dicyandiamide.

Examples 5 to 6:

A similar continuous mixing reactor as that used in the aforementioned examples was employed. Warm water at 80°C was passed through the heating jacket and the two rotors were rotated in different directions at a speed of 80 rpm. Copolymerization was carried out by continuously feeding into the reactor, at a rate of 8kg per hour, a feedstock comprising trioxane and ethylene oxide in a weight ratio of 100:2.5 and having 0.5% hexamethylene glycol bis(3,5-di-t-butyl-4-hydroxyhydrocinnamate) (Irganox (R) 259, a product of CIBA-GEIGY) dissolved therein, and simultaneously and continuously feeding a solution of boron trifluoride butyl etherate in cyclohexane into the reactor at a rate corresponding to 70 ppm of the boron trifluoride based on the total weight of the monomers to be polymerised. The reaction mixture which was discharged from the opposite end of the reactor was immediately transferred into another reaction vessel held at 80°C, to continue the polymerization reaction for a further 10 minutes. Thereafter, the product was washed by throwing into water containing 0.1% of tributylamine, dehydrated and dried by blowing overnight at 70°C. Various measurements of the polymer taken at this stage gave the values as shown in the table below. The weight loss by heating was measured after addition of 0.5% of 2,2′-methylenebis(4-methyl-6-t-butylphenol) and 0.1% of dicyandiamide as stabilizers to the obtained polymer.

| Polymerization yield | MI | Rate of alkali decomposition | Rate of weight loss by heating | Melting point |
|---|---|---|---|---|
| 92% | 7.7 | 3.5% | 3.1% | 169°C |

Two samples of the dried copolymer were melted, kneaded (at approx. 235°C resin temperature) and extruded, using a twin-screw extruder with venthole of 40mm ID and aspirating via this venthole at a pressure of 13.2 kPa (100mm Hg). Substances were added to the copolymer samples in the heat treatment, as indicated in Table 2. Properties of the heat treated copolymers are shown in that Table.

Comparative Examples 9 to 12:

A copolymerization was performed in the same manner as in Examples 5 and 6 but without the addition of hexamethylene glycol bis(3,5-di-t-butyl-4-hydroxyhydrocinnamate). The yield of copolymer and certain properties thereof are shown in the table below. Here again the weight loss by heating were measured after addition of the same stabilisers as in Examples 5 and 6.

| Polymerization yield | MI | Rate of alkali decomposition | Rate of weight loss by heating | Melting point |
|---|---|---|---|---|
| 89% | 9.1 | 5.1% | 5.4% | 169°C |

Four samples of the dried copolymer were melted, kneaded and extruded, while sucking, using a screw extruder as in Examples 5 to 6, to obtain the copolymer. Substances were added to the copolymer samples, in the heat treatment, as indicated in Table 2. Properties of the heat-treated products are shown in that Table.

TABLE 2

| | Sterically hindered phenol added to mono - mers (note 4) | Sterically hindered phenol added in the melting treatment (note 4) | Additive other than that in the left columns added in the melting treatment | Properties after the melting treatment (note 5) | | |
|---|---|---|---|---|---|---|
| | | | | MI | Rate of alkali decomposition | Rate of thermal decomposition (note 6) |
| Example 5 | 0.5% | - | 0.2% of melamine | 7.6 (-0.1) | 1.8% (-1.7%) | 1.2% (-1.9%) |
| Comparative example 9 | - | - | same as above | 10.3 (+1.2) | 5.0% (-0.1%) | very high |
| Comparative example 10 | - | 0.5% | same as above | 9.9 (+0.8%) | 3.7% (-1.4%) | 3.9% (-1.5%) |
| Example 6 | 0.5% | - | 0.2% of polyamide (note 7) | 7.7 ( 0 ) | 2.0% (-1.5%) | 1.3% (-1.8%) |
| Comparative example 11 | - | - | Same as above | 11.5 (+2.4) | 5.6% (+0.5%) | very high |
| Comparative example 12 | - | 0.5% | Same as above | 9.8 (+0.7) | 4.1% (-1.0%) | 4.2% (-1.2%) |

Note 4: Hexamethylene glycol bis(3,5-di-t-butyl-4-hydroxyhydrocinnamate) (Irganox® 259, a product of CIBA-GEIGY) was used.

Note 5: Numerals in parentheses give rates of change resulting from melting treatment.

Note 6: Measurements were taken without particular addition of stabilizers

Note 7: Nylon-12 ("Daiamide", a product of Daicel) was used.

## Claims

1. A method of manufacturing a copolymer of trioxane with enhanced stability by copolymerising trioxane with a co-monomer in the presence of a cation-active catalyst and of a substituted phenol, characterised in that the co-polymerisation is carried out in the presence of from 0.001 to 2.0% by weight, based on the total amount of the monomers, of one or more sterically hindered phenols selected from hexamethylene glycol bis(3,5-di-t-butyl-4-hydroxy-hydrocinnamate), tetrakis[methylene(3,5-di-t-butyl-4-hydroxyhydrocinnamate)]methane, triethylene glycol bis-3-(3-t-butyl-4-hydroxy-5-methyl-phenyl) propionate, and n-octadecyl 3-(4′-hydroxy-3′,5′-di-t-butylphenyl) propionate, which phenol(s) become(s) uniformly distributed in the copolymer in course of the polymerisation, and in that following the polymerisation the formed copolymer containing said distributed phenol(s) is heated to cause melting of the copolymer.

2. A method according to claim 1, wherein trioxane monomer is used in an amount of of 99.99 to 75 percent by weight based on the total amount of the monomers to be co-polymerised.

3. A method according to claim 1 or 2, wherein the copolymer is heated to a temperature of up to 100°C higher than the melting point or melting point range of the copolymer.

4. A method according to claim 3, wherein the said heating of the copolymer is carried out for from 1 to 30 minutes.

5. A method according to any preceding claim, wherein the said melting step is carried out after separation of trioxane copolymer from the polymerization mixture.

6. A method according to any preceding claim, wherein the sterically hindered phenol is selected from hexamethylene glycol bis(3,5-di-t-butyl-4-hydroxy-hydrocinnamate), tetrakis[methylene(3,5-di-t-butyl-4-hydroxyhydrocinnamate)] methane and triethylene glycol bis-3-(3-t-butyl-4-hydroxy-5-methyl-phenyl)propionate.

7. A method according to any preceding claim, wherein the co-polymerization is carried out in the presence of from 0.005 to 1.0% by weight of said sterically hindered phenols.

8. A method according to any preceding claim, wherein the trioxane is co-polymerized with a cyclic ether.

9. A method according to any preceding claim, wherein the said co-monomer is selected from cyclic esters, vinyl compounds, alkyl mono- or di-glycidyl ethers, and cyclic ethers represented by the formula,

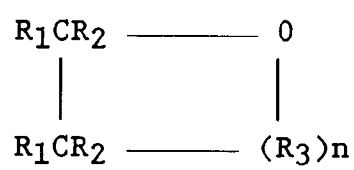

(where $R_1$ and $R_2$ each stands for hydrogen, a lower alkyl or lower halogen-substituted alkyl group; $R_3$ is a methylene, oxymethylene, lower alkyl- or halogenoalkyl-substituted methylene, or lower alkyl- or halogenoalkyl-substituted oxymethylene group and n represents 0 to 3).

10. A method according to claim 9, wherein the said co-monomer is selected from epichlorohydrin, ethylene oxide, 1,3-dioxolane, diethylene-glycolformal, 1,4-butanediolformal, and 1,3-dioxane, methylglycidylformal, ethylglycidylformal, propylglycidylformal, butylglycidylformal, ethyleneglycoldiglycidylether, triethyleneglycoldiglycidylether and bis(1,2,6-hexanetriol) triformal.

11. A method according to any preceding claim, wherein use is made of a cation-active catalyst selected from Lewis acids, protonic acids, protonic acid esters, protonic acid anhydrides trimiethyloxonium hexalfluorophosphate, triphenylmethyl hexafluoroarsenate, acetyl tetrafluoroborate, acetyl hexafluorophosphate and acetyl hexafluoroarsenate.

12. A method according to any of claims 1 to 10, wherein use is made of a cation-active catalyst selected from boron trifluoride, tin tetrachloride, titanium tetrachloride, phosphorus pentachloride, phosphorus pentafluoride, arsenic pentalfuoride and antimony pentafluoride and their complex compounds or salts, perchloric acid and acetyl perchlorate.

13. A method according to any of claims 1 to 10, wherein use is made of a cation-active catalyst selected from boron trifluoride, boron trifluoride diethyletherate, boron trifluoride di-n-butyl etherate and triethyloxonium tetrafluoroborate.

## Revendications

1. Un procédé de fabrication d'un copolymère de trioxanne, de stabilité améliorée, par copolymérisation de trioxanne avec un comonomère en présence d'un catalyseur cationiquement actif et d'un phénol substitué, caractérisé en ce que la copolymérisation est conduite en présence de 0,001 à 2,0 % en poids, sur la base de la quantité totale des monomères, d'un ou plusieurs phénols à empêchement stérique choisi(s) parmi le bis(3,5-di-t-butyl-4-hydroxyhydrocinnamate) d'hexaméthylène-glycol, le trétrakis(3,5-di-t-butyl-4-hydroxyhydrocinnamate de méthylène)méthane, le bis-3-(3-t-butyl-4-hydroxy-5-méthylphényl)propionate de triéthylène-glycol, et le 3-(4'-hydroxy-3',5'-di-t-butylphényl)propionate de n-octadécyle, ce ou ces phénols se répartissant uniformément dans le copolymère au cours de la polymérisation, et en ce que, après la polymérisation, le copolymère formé contenant ledit ou lesdits phénols répartis est chauffé pour provoquer la fusion du copolymère.

2. Un procédé tel que revendiqué dans la revendication 1, dans laquel on utilise le trioxanne monomère en une proportion de 99,99 à 75 pour cent en poids, sur la base du poids total des monomères à copolymériser.

3. Un procédé selon la revendication 1 ou 2, dans lequel le copolymère est chauffé à une température de jusqu'à 100°C supérieure au point de fusion ou à la plage de fusion du copolymère.

4. Procédé selon la revendication 3, dans lequel ledit chauffage du copolymère est effectué pendant 1 à 30 minutes.

5. Un procédé selon l'une quelconque des revendications précédentes, dans lequel ladite étape de fusion est conduite après la séparation du copolymère de trioxanne du mélange de polymérisation.

6. Un procédé selon l'une quelconque des revendications précédentes, dans lequel on utilise un phénol à empêchement stérique choisi parmi le bis(3,5-di-t-butyl-4-hydroxyhydrocinnamate) d'hexaméthylèneglycol, le trétrakis(3,5-di-t-butyl-4-hydroxyhydrocinnamate de méthylène)méthane, et le bis-3-(3-t-butyl-4-hydroxy-5-méthylphényl)propionate de triéthylène-glycol.

7. Un procédé selon l'une quelconque des revendications précédentes, dans lequel la copolymérisation est conduite en présence de 0,005 à 1,0 % en poids desdits phénols à empêchement stérique.

8. Un procédé selon l'une quelconque des revendications précédentes, dans lequel le trioxanne est copolymérisé avec un éther cyclique.

9. Un procédé selon l'une quelconque des revendications précédentes, dans lequel ledit comonomère est choisi parmi les esters cycliques, les composés vinyliques, les éthers d'alkyle et de mono- ou diglycidyle, et les éthers cycliques représentés par la formule

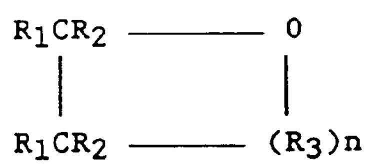

(où $R_1$ et $R_2$ représentent chacun de l'hydrogène, un groupe alkyle inférieur ou alkyle inférieur halogéné ; $R_3$ est un groupe méthylène, oxyméthylène, méthylène substitué par un groupe alkyle inférieur ou halogénoalkyle inférieur, ou oxyméthylène substitué par un groupe alkyle inférieur ou halogénoalkyle inférieur, et n représente 0 à 3).

10. Un procédé selon la revendication 9,dans lequel ledit comonomère est choisi parmi l'épichlorhydrine, l'oxyde d'éthylène, le 1,3-dioxolane, le diéthylène-glycolformal, le 1,4-butanediolformal et le 1,3-dioxanne, le méthylglycidylformal, l'éthylglycidylformal, le propylglycidylformal, le butylglycidylformal, l'éther diglycidylique d'éthylène-glycol, l'éther diglycidylique de triéthylène-glycol et le bis(1, 2, 6-hexanetriol)triformal.

11. Un procédé selon l'une quelconque des revendications précédentes, dans lequel on utilise un catalyseur cationiquement actif, choisi parmi les acides de Lewis, les acides protoniques, les esters d'acides protoniques, les anhydrides d'acides protoniques, l'hexafluorophosphate de triméthyloxonium, l'hexafluoroarséniate de triphénylméthyle, le tétrafluoroborate d'acétyle, l'hexafluorophosphate d'acétyle et l'hexafluoroarséniate d'acétyle.

12. Un procédé selon l'une quelconque des revendications 1 à 10, dans lequel on utilise un catalyseur cationiquement actif, choisi parmi le trifluorure de bore, le tétrachlorure d'étain, le tétrachlorure de titane, le pentachlorure de phosphore, le pentafluorure de phosphore, le pentafluorure d'arsenic et le pentafluorure d'antimoine et leurs complexes ou sels, l'acide perchlorique et le perchlorate d'acétyle.

13. Un procédé selon l'une quelconque des revendications 1 à 10, dans lequel on utilse un catalyseur cationiquement actif, choisi parmi le trifluorure de bore, l'éthérolat diéthylique de trifluorure de bore, l'éthérolat di-n-butylique de trifluorure de bore et le tétrafluoroborate de triéthyloxonium.

**Patentansprüche**

1. Verfahren zur Herstellung eines Copolymers aus Trioxan mit verstärkter Stabilität durch Copolymerisieren von Trioxan mit einem Co-Monomer in Gegenwart eines kationenaktiven Katalysators und eines substituierten Phenols, dadurch gekennzeichnet, daß die Copolymerisation durchgeführt wird in Gegenwart von 0,001 bis 2,0 Gew.-%, bezogen auf die Gesamt-Menge der Monomeren, eines oder mehrerer sterisch gehinderter Phenole, die ausgewählt sind aus Hexamethylenglycol-bis(3,5-di-t-butyl-4-hydroxyhydrocinnamat), Tetrakis[methylen(3,5-di-t-butyl-4-hydroxyhydrocinnamat)]methan, Triethylenglycol-bis-3-(3-t-butyl-4-hydroxy-5-methylphenyl)propionat und n-Octadecyl-3-(4′-hydroxy-3′,5′-di-t-butylphenyl)propionat, wobei das(die) Phenol(e) im Laufe der Polymerisation in dem Copolymer gleichmäßig verteilt wird/werden, und daß im Anschluß an die Polymerisation das gebildete Copolymer, das das(die) verteilte(n) Phenol(e) enthält, erhitzt wird, um das Schmelzen des Copolymers zu bewirken.

2. Verfahren nach Anspruch 1, in dem das Trioxan-Monomer in einer Menge von 99,99 bis 75 Gew.-%, bezogen auf das Gesamtgewicht der zu co-polymerisierenden Monomeren, eingesetzt wird.

3. Verfahren nach Anspruch 1 oder 2, worin das Copolymer auf eine Temperatur erhitzt wird, die bis 100 °C höher ist als der Schmelzpunkt oder Schmelzbereich des Copolymers.

4. Verfahren nach Anspruch 3, worin das Erhitzen des Copolymers 1 bis 30 min lang durchgeführt wird.

5. Verfahren nach irgendeinem vorhergehenden Anspruch, worin der Schritt des Schmelzens nach der Abtrennung des Trioxan-Copolymers aus dem Polymerisationsgemisch durchgeführt wird.

6. Verfahren nach irgendeinem vorhergehenden Anspruch, worin das sterisch gehinderte Phenol aus Hexamethylenglycol-bis(3,5-di-t-butyl-4-hydroxyhydrocinnamat), Tetrakis[methylen(3,5-di-t-butyl-4-hydroxyhydrocinnamat)]methan und Triethylenglycol-bis-3-(3-t-butyl-4-hydroxy-5-methylphenyl)propionat ausgewählt ist.

7. Verfahren nach irgendeinem vorhergehenden Anspruch, worin die Copolymerisation in Gegenwart von 0,005 bis 1,0 Gew.-% der sterisch gehinderten Phenole durchgeführt wird.

8. Verfahren nach irgendeinem vorhergehenden Anspruch, worin das Trioxan mit einem cyclischen Ether copolymerisiert wird.

9. Verfahren nach irgendeinem vorhergehenden Anspruch, worin das Comonomer aus cyclischen Estern, Vinyl-Verbindungen, Alkylmono- oder -diglycidylethern und cyclischen Ethern der Formel

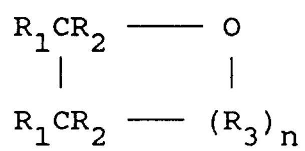

(worin $R_1$ und $R_2$ jeweils für Wasserstoff, Niederalkyl oder eine niedere, Halogen-substituierte Alkyl-Gruppe stehen; $R_3$ Methylen, Oxymethylen, Niederalkyl- oder Halogenoalkyl-substituiertes Methylen oder eine Niederalkyl- oder Halogenoalkyl-substituierte OxymethylenGruppe ist und n 0 bis 3 bezeichnet) ausgewählt ist.

10. Verfahren nach Anspruch 9, worin das Comonomer aus Epichlorhydrin, Ethylenoxid, 1,3-Dioxolan, Diethylenglycolformal, 1,4-Butandiolformal und 1,3-Dioxan, Methylglycidylformal, Ethylglycidylformal, Propylglycidylformal, Butylglycidylformal, Ethylenglycoldiglycidylether, Triethylenglycoldiglycidylether und Bis(1,2,6-hexantriol)triformal ausgewählt ist.

11. Verfahren nach irgendeinem vorhergehenden Anspruch, worin ein kationenaktiver Katalysator, der aus Lewis-Säuren, Protonensäuren, Protonensäure-estern, Protonensäure-anhydriden, Trimethyloxoniumhexafluorphosphat, Triphenylmethylhexafluorarsenat, Acetyltetrafluorborat, Acetylhexafluorphosphat und Acetylhexafluorarsenat ausgewählt ist, zum Einsatz kommt.

12. Verfahren nach irgendeinem der Ansprüche 1 bis 10, worin ein kationenaktiver Katalysator, der aus Bortrifluorid, Zinntetrachlorid, Titantetrachlorid, Phosphorpentachlorid, Phosphorpentafluorid, Arsenpentafluorid und Antimonpentafluorid und deren Komplex-Verbindungen oder Salzen, Perchlorsäure und Acetylperchlorat ausgewählt ist, zum Einsatz kommt.

13. Verfahren nach irgendeinem der Ansprüche 1 bis 12, worin ein kationenaktiver Katalysator, der aus Bortrifluorid, Bortrifluorid-diethyletherat, Bortrifluorid-di-n-butyl-etherat, Triethyloxoniumtetrafluoroborat ausgewählt ist, zum Einsatz kommt.